# EUROPEAN PATENT APPLICATION

(11) **EP 2 561 742 A1**
(43) Date of publication of application: **27.02.2013**
(21) Application number: 12005972.0
(22) Date of filing: 21.08.2012
(51) Int. Cl.: A01B 33/02, A01B 39/00, B62D 51/04, B62D 51/06, H01M 2/10

(54) **Electric-powered cultivator**

(30) Priority: 22.08.2011 JP 2011180471
(71) Applicant: Makita Corporation, Anjo-shi, Aichi 446-8502 (JP)
(72) Inventor: Tozawa, Katsumi, Anjo-shi Aichi 446-8502 (JP); Takeda, Shigeru, Anjo-shi Aichi 446-8502 (JP); Haneda, Kouji, Anjo-shi Aichi 446-8502 (JP); Watanabe, Mitsunori, Anjo-shi Aichi 446-8502 (JP)
(74) Representative: Müller-Boré & Partner Patentanwälte

(57) **Abstract**

A cultivator (1')configured such that at least one rechargeable specified battery (21,22) for an electrical power tool can be attached thereto as a power source includes at least one battery converter (41,42) that is capable of being coupled to at least one battery coupling portion (27,28).

## Description

The present invention relates to electric-powered cultivators used for farm work. More particularly, the present invention relates to an electric-powered cultivators that can use, as a power source, a rechargeable battery typically used in electrical power tools.

In recent years, handheld electrical power tools (e.g., electric drills, electric screwdrivers and electric cutting machines) powered by rechargeable batteries such as lithium ion batteries have been widely used. Generally, in such electrical power tools, a plurality of batteries may respectively be provided for each of the electrical power tools in order to perform uninterrupted work.

Conversely, in an industry of cultivators mainly used for farm work, relatively small electric-powered cultivators powered by rechargeable batteries have been provided. Such electric-powered cultivators are taught by, for example, Japanese Patent No. 4116904, and Japanese Laid-Open Patent Publications Nos. 2009-118753 and 2011-5.

However, each of the prior art electric-powered cultivators requires the use of a special battery. Therefore, there is a need in the art for an improved electric-powered cultivator.

In one aspect of the present invention, a cultivator configured such that at least one rechargeable specified battery for an electrical power tool can be attached thereto as a power source may include at least one battery converter that is capable of being coupled to at least one battery coupling portion.

According to this aspect, the cultivator can be operated by the at least one rechargeable battery mainly used by an electrical power tool such as an electric drill, an electric screwdriver, an electric cutting machine or other such devices. Further, it is possible to share the at least one rechargeable battery between the electrical power tool and the cultivator. Therefore, the at least one battery can be efficiently used, so as to reduce costs for the power source of the cultivator.
Further, according to this aspect, batteries other than the specified battery can be used as the power source. For example, batteries of 18 volts can be used as the power source of 36 volts.

Optionally, the at least one battery converter and the at least one battery coupling portion respectively may include first and second battery converters and first and second battery coupling portions. The first battery converter may include a converter unit that contains batteries other than the specified battery therein, an adapter unit that is capable of being coupled to the first battery coupling portion, and an adapter cord that electrically connects the converter unit and the adapter unit. The second battery converter may include a base unit that contains batteries other than the specified battery therein, and a connecting portion that is capable of being coupled to the second battery coupling portion.

Other objects, features and advantages of the present invention will be readily understood after reading the following detailed description together with the accompanying drawings and the claims.

FIG. 1 is a side view of a cultivator according to a first representative embodiment of the present invention;
FIG. 2 is a side view of the cultivator, in which a main body portion and a functioning portion are shown in cross section;
FIG. 3 is a perspective view of the cultivator, in which a battery cover is opened;
FIG. 4 is a plan view of the cultivator, in which the battery cover is opened;
FIG. 5 is a perspective view of the cultivator, in which batteries are removed upward while the battery cover is opened;
FIG. 6 is a rear view of the main body portion and the functioning portion in a condition in which the battery cover is opened and in which carrier wheels are lowered, which view is partially shown as a cross-sectional view taken along line VI-VI of FIG. 1;
FIG. 7 is a side view of a cultivator according to a second representative embodiment of the present invention, which cultivator has battery converters;
FIG. 8 is a perspective view of the cultivator, in which a battery cover is opened;
FIG. 9 is a plan view of the cultivator, in which the battery cover is opened;
FIG. 10 is a rear view of the main body portion and the functioning portion in a condition in which the battery cover is opened and in which carrier wheels are lowered;
FIG. 11 is a perspective view of a hedge trimmer to which the first battery converter is connected;
FIG. 12 is a perspective view of a converter unit of the first battery converter, in which a lid is opened;
FIG. 13 is a perspective view of a converter base of the second battery converter, in which batteries are removed; and
FIG. 14 is a rear view of the second battery converter.

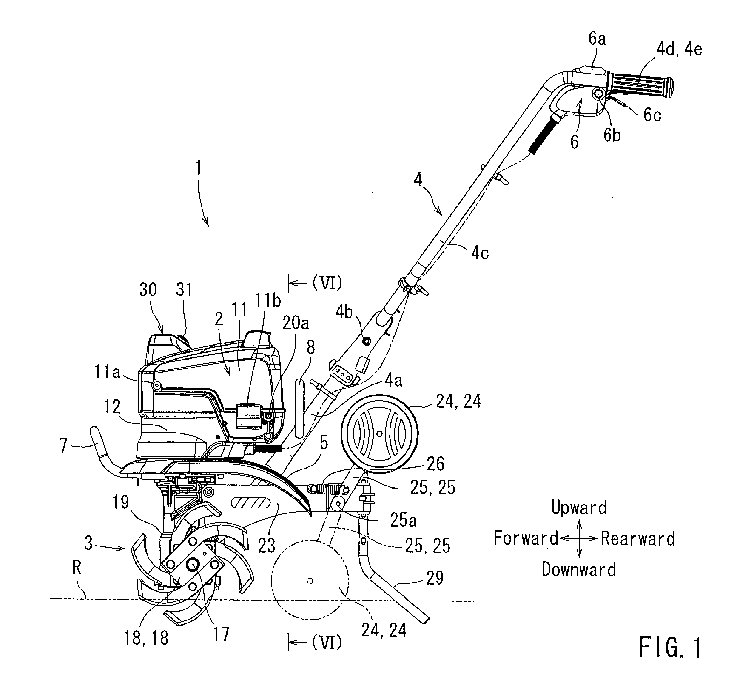

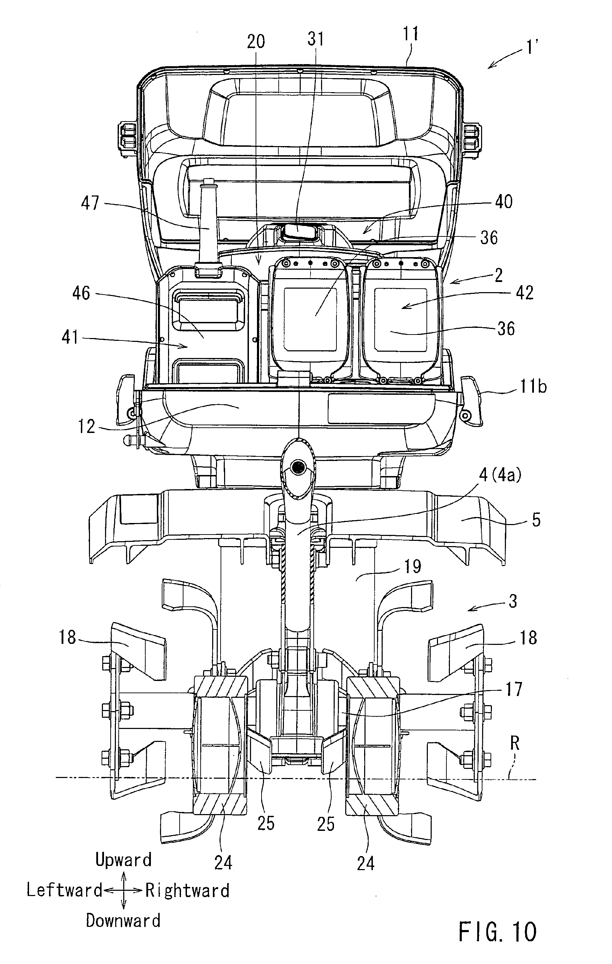

A representative embodiment of the present invention will now be described in detail with reference to FIGS. 1 to 14.

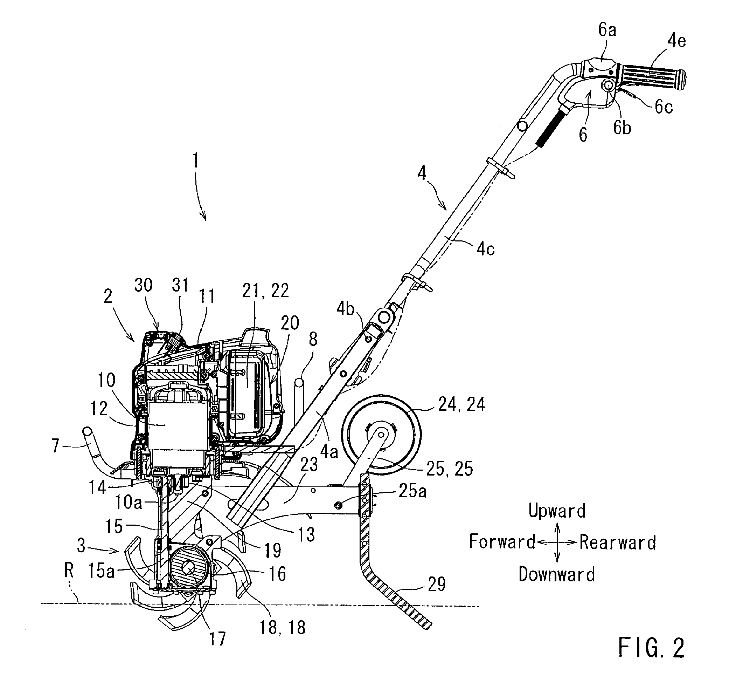

As shown in FIG. 1, an electric-powered cultivator 1 may include a main body portion 2 having an electric motor 10 (a drive source) therein, a working or functioning portion 3 and a handle portion 4. As shown in FIG. 2, the electric motor 10 may be vertically disposed in a housing 12 of the main body portion 2 while an output shaft 10a thereof is directed downwardly. A drive gear 13 may be attached to the output shaft 10a of the electric motor 10. A driven gear 14 may be meshed with the drive gear 13. The driven gear 14 may be secured to an upper end of a vertically elongated drive shaft 15. The drive shaft 15 may be rotatably supported on a casing 19 of the functioning portion 3, which casing may be attached to a lower surface of the housing 12. The drive shaft 15 may preferably be positioned so as to have a rotational axis parallel to a motor rotational axis (i.e., a rotational axis of the output shaft 10a of the electric motor 10).

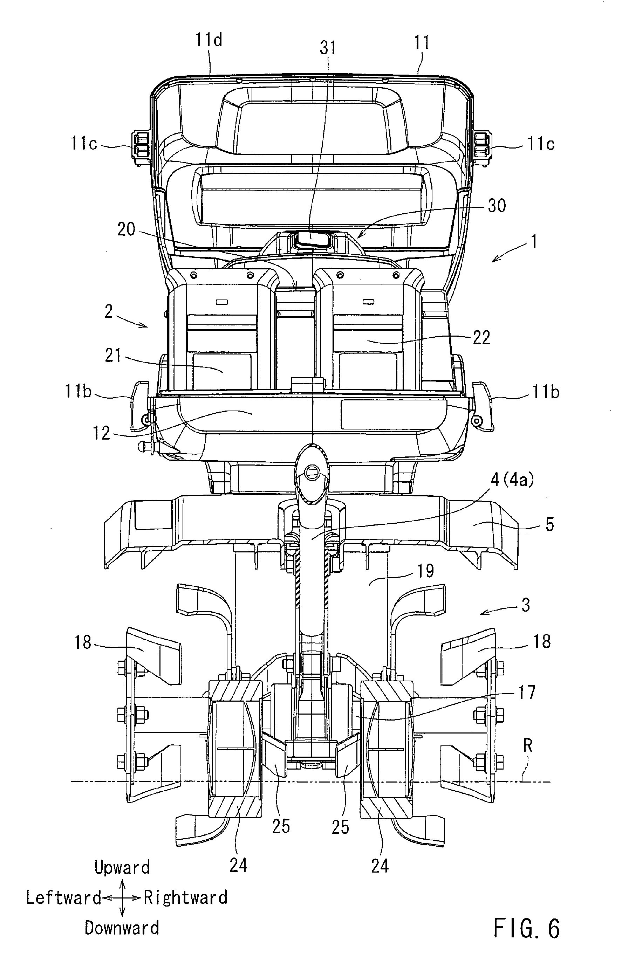

A worm gear 15a may be formed in a lower end portion of the drive shaft 15. The worm gear 15a may be meshed with a worm wheel 16 that is attached to an output shaft 17. The output shaft 17 may be laterally positioned and rotatably supported on a lower portion of the casing 19. In particular, the output shaft 17 may preferably be positioned so as to have a lateral rotational axis intersecting with the rotational axis of the drive shaft 15. As best shown in FIG. 6, the output shaft 17 may have right and left end portions 17a and 17b that are respectively outwardly projected from right and left side walls of the casing 19. A pair of (right and left) cultivator blades 18 may respectively be attached to the end portions 17a and 17b of the output shaft 17.

As will be appreciated, upon actuation of the electric motor 10, the drive shaft 15 can be rotated via the drive gear 13 and the driven gear 14 that are meshed with each other. Rotational motion of the drive shaft 15 can be transmitted to the output shaft 17 via the worm gear 15a and the worm wheel 16 that are meshed with each other, so as to rotate the output shaft 17. Upon rotation of the output shaft 17, the cultivator blades 18 can be rotated to cultivate a field or ground surface R.

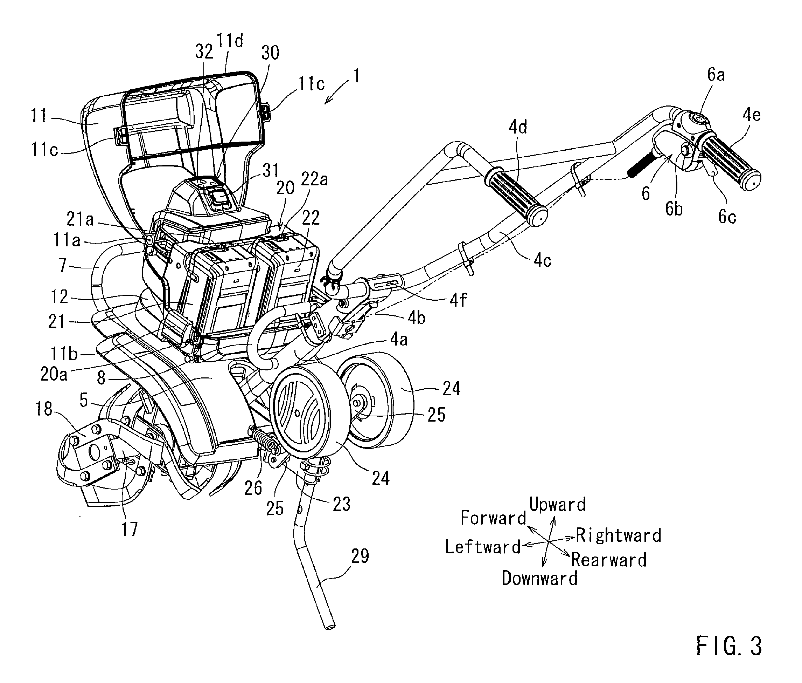

As shown in, for example, FIG. 3, a rotary cover 5 may be attached to a lower portion of the housing 12 of the main body portion 2. The rotary cover 5 may be configured to project over the right and left cultivator blades 18. That is, the rotary cover 5 may be configured to project rightward, leftward and rearward beyond the housing 12. As will be recognized, the rotary cover 5 may function to prevent soil and stones from being tossed upwards from the ground surface R by the cultivator blades 18 and flying toward a user of the cultivator 1.

The casing 19 of the functioning portion 3 may include a (subsidiary) support arm 23 that is attached thereto. The support arm 23 may extend horizontally rearward (toward the user) from the casing 19. A pair of (right and left) carrier wheels 24 may respectively be attached to the support arm 23 via a pair of stays 25. In particular, proximal ends of the stays 25 may respectively be vertically rotatably connected to both (right and left) sides of the support arm 23 via pivot shafts 25a. The carrier wheels 24 may respectively be freely rotatably attached to distal ends (rotation ends) of the stays 25. Further, a drag rod 29 may be detachably attached to a rear end portion of the support arm 23.

As shown in FIGS. 1, 3 and 5, tension springs 26 (one of which is shown) may respectively be disposed between the stays 25 and the support arm 23. The tension springs 26 may be arranged and constructed such that the stays 25 can be positioned in either an upper rotational position shown by solid line in FIG. 1 or a lower rotational position shown by broken line in FIG. 1 due to spring forces thereof. As a result, the carrier wheels 24 attached to the stays 25 can be positioned in either a non-use position (a retracted position) shown by solid line in FIG. 1 or a use position (a grounding position) shown by broken line in FIG. 1 due to the spring forces of the tension springs 26. Therefore, when the carrier wheels 24 are positioned in the non-use position, the stays 25 can be manually rotated downwardly against the spring forces of the tension springs 26. Thus, the carrier wheels 24 can be moved to and held in the use position. To the contrary, when the carrier wheels 24 are positioned in the use position, the stays 25 can be manually rotated upward against the spring forces of the tension springs 26. Thus, the carrier wheels 24 can be moved to and held in the non-use position.

The drag rod 29 may be formed as a gently bent V-shaped rod. The drag rod 29 is intended to dig into the ground surface R when the cultivator 1 is used, so as to produce a drag tension or force. Due to the drag force, the cultivator blades 18 can provide an increased cultivating force in the ground surface R. Further, the drag rod 29 can be attached to the support arm 23 in various vertical attachment positions such that a downward projection amount thereof can be changed. Also, the drag rod 29 can be attached to the support arm 23 in a vertically inverted posture (not shown).

Generally, as shown in, for example, FIG. 1, when the cultivator 1 is used (i.e., when the ground surface R is cultivated using the cultivator 1), the drag rod 29 may be attached to the support arm 23, so as to be sufficiently projected downwardly (a use position). At this time, the carrier wheels 24 may be moved to the upper retracted position shown by solid line in FIG. 1. Thus, the ground surface R can be cultivated by the cultivator blades 18 while the drag rod 29 is dug into the ground surface R. To the contrary, when the cultivator 1 is moved or transferred without cultivating the ground surface R, the drag rod 29 may be repositioned to an uppermost position (a non-use position), so as to not be substantially projected downward. Alternatively, it may be reattached to the support arm 23 in the vertically inverted posture, so that it is projected upwards. At this time, the carrier wheels 24 may be moved or rotated to the lower grounding position shown by broken line in FIG. 1. Thus, the cultivator 1 can be moved using the carrier wheels 24 while the cultivator blades 18 are lifted up from the ground surface R.

The main body portion 2 may have a battery attachment portion 20 that is preferably configured to receive two batteries 21 and 22. Further, each of the batteries 21 and 22 may be a rechargeable battery for a handheld electrical power tool, e.g., an electric drill, an electric screwdriver and an electric cutting machine (not shown). An example of such a rechargeable battery is a lithium ion battery that has less natural discharge than a regular battery and is capable of being recharged. Further, each of the batteries 21 and 22 may have a rated voltage of 36 volts. Also, each of the batteries 21 and 22 may be prepared as a battery pack that is composed of a battery case and a plurality of cells (battery elements) received in the battery case. Each of the batteries 21 and 22 thus constructed can be repeatedly charged using a separately prepared battery charger (not shown).

A power circuit (not shown) of the main body portion 2 may be specifically designed so as to be adaptable to a power source of 36 volts, which voltage may be referred to as a specified source voltage. Therefore, the batteries 21 and 22 having the rated voltage of 36 volts can be directly used as the power source. That is, the batteries 21 and 22 may be referred to as adaptable or specified batteries.

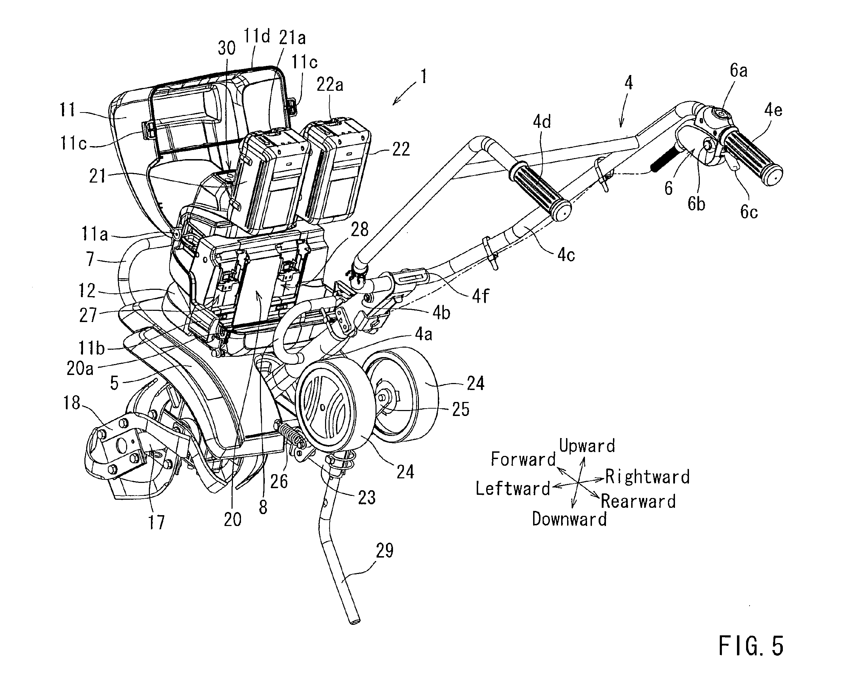

As shown in FIG. 2, the battery attachment portion 20 may be positioned on a rear portion of the main body portion 2, so as to be positioned behind the electric motor 10. Further, as shown in FIGS. 3 to 5, the battery attachment portion 20 may be configured to receive the batteries 21 and 22 while the batteries 21 and 22 are laterally juxtaposed to each other. In particular, the battery attachment portion 20 may be configured to receive the batteries 21 and 22 while the batteries 21 and 22 are positioned on both sides of the motor rotational axis. As shown in FIG. 5, the battery attachment portion 20 may have a pair of (first and second) battery coupling portions 27 and 28 to which the batteries 21 and 22 can be slidably coupled. Each of the battery coupling portions 27 and 28 may have the same attachment construction as a battery coupling portion of the handheld electrical power tool in which each of the batteries 21 and 22 is used as a power source. In particular, each of the battery coupling portions 27 and 28 may have a slide coupling mechanism. That is, each of the battery coupling portions 27 and 28 may have a pair of (right and left) slide rail portions and a connecter portion positioned between the slide rail portions.

The housing 12 may have a battery cover 11 (a cover member) that is capable of covering the batteries 21 and 22 received in the battery attachment portion 20. The battery cover 11 may be pivotally attached to an upper portion of the housing 12 via a pair of (right and left) pivot pins 11 a (one of which is shown), so as to be vertically rotated forward and rearward about the pivot pins 11a. As shown in FIG. 5, when the battery cover 11 is rotated forward (opened), the battery attachment portion 20 can be opened, so that the batteries 21 and 22 can be attached to and detached from the battery attachment portion 20. To the contrary, when the battery cover 11 is rotated rearward (closed), the battery attachment portion 20 can be closed, so that the batteries 21 and 22 received in the battery attachment portion 20 can be covered.

The batteries 21 and 22 can be coupled or attached to the battery coupling portions 27 and 28 by simply sliding the batteries 21 and 22 along the battery coupling portions 27 and 28 from above after the battery cover 11 is rotated forwardly. In this manner, the batteries 21 and 22 can be attached to the battery attachment portion 20. To the contrary, the batteries 21 and 22 can be removed or detached from the battery coupling portions 27 and 28 by simply pulling the batteries 21 and 22 upward while the battery cover 11 is opened. Thus, the batteries 21 and 22 can be detached from the battery attachment portion 20. Further, the batteries 21 and 22 can be separately attached to and detached from the battery coupling portions 27 and 28.

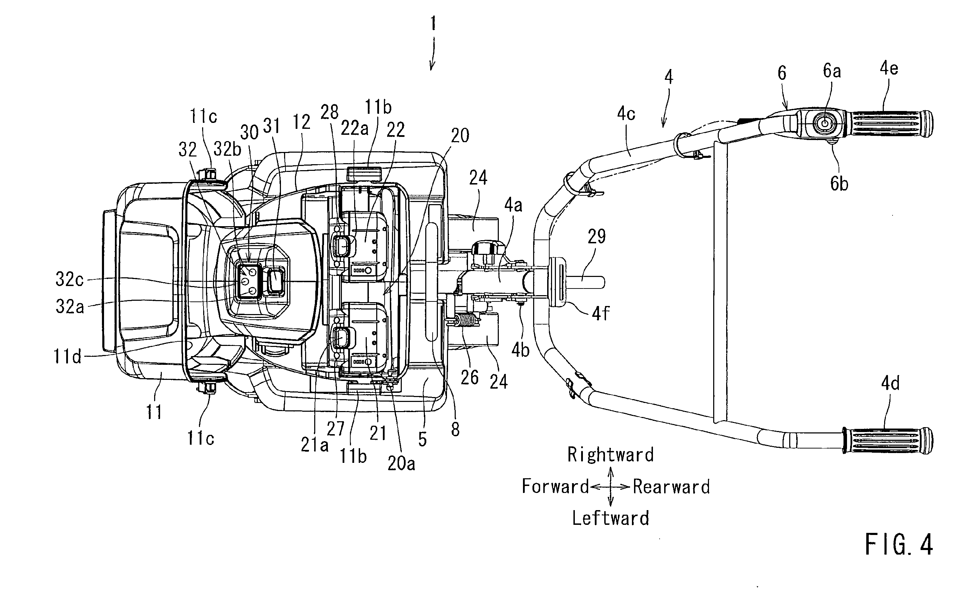

The batteries 21 and 22 may have locking members (not shown) formed therein. The locking members may be arranged and constructed to automatically engage the battery coupling portions 27 and 28 when the batteries 21 and 22 are attached to the battery coupling portions 27 and 28 by sliding the same along the battery coupling portions 27 and 28 from above. Therefore, when the batteries 21 and 22 are attached to the battery coupling portions 27 and 28, the batteries 21 and 22 can be securely connected to the battery coupling portions 27 and 28 via the locking members, so that an attached condition of the batteries 21 and 22 to the battery coupling portions 27 and 28 can be locked. Conversely, as shown in FIG. 4, the batteries 21 and 22 may respectively have unlocking members 21a and 22a formed in an upper portion thereof. The unlocking members 21a and 22a may be arranged and constructed to disengage the locking members from the battery coupling portions 27 and 28 when they are pressed down in a condition in which the locking members engage the battery coupling portions 27 and 28. That is, when the unlocking members 21a and 22a are pressed down in the condition in which the locking members engage the battery coupling portions 27 and 28, the attached condition of the batteries 21 and 22 to the battery coupling portions 27 and 28 can be unlocked. Therefore, in order to detach the batteries 21 and 22 from the battery coupling portions 27 and 28, the unlocking members 21a and 22a may be pressed down to unlock the attached condition of the batteries 21 and 22 before the batteries 21 and 22 are pulled upward.

As shown in FIG. 1, the main body portion 2 may have a battery switching portion 30 that is disposed on an upper portion thereof. The battery switching portion 30 may include a switch 31 and an operation indicator 32. The switch 31 is for the user to switch electrical connections between the batteries 21 and 22 and a power circuit (not shown) in the main body portion 2. Upon manipulation of the switch 31, either one of the batteries 21 and 22 can be electrically connected to the power circuit (i.e., either one of the batteries 21 and 22 can be operative) to enable the power circuit to apply electrical power to the electric motor 10. In particular, when the switch 31 is moved to the left, the battery 21 (the left-side battery) can be operative, so as to provide a condition in which electrical power can be applied to the electric motor 10 via the battery 21. To the contrary, when the switch 31 is moved to the right, the battery 22 (the right-side battery) can be operative, so as to provide a condition in which the electrical power can be applied to the electric motor 10 via the battery 22.

The operation indicator 32 is constructed to indicate which of the batteries 21 and 22 is in operation. In particular, the operation indicator 32 may have a pair of (right and left) green operation indicator lamps 32a and 32b. When the switch 31 is moved to the left, i.e., when the (left) battery 21 is operative, the (left) operation indicator lamp 32a can be turned on. To the contrary, when the switch 31 is moved to the right, i.e., when the (right) battery 22 is operative, the (right) operation indicator lamp 32b can be turned on. Thus, the user of the cultivator 1 can know simply view the operation indicator 32 and realize which of the batteries 21 and 22 is in use.

Further, the operation indicator 32 may additionally have a red warning lamp 32c. The warning lamp 32c can be constructed to be turned on when a battery level of the battery 21 or 22 is reduced. Also, the warning lamp 32c can be turned on when power supply in the batteries 21 and 22 and the battery coupling portions 27 and 28 cannot be performed normally, e.g., when excess current or other such hazard is generated.

The battery 21 (or 22) that is switched to an inoperative condition by manipulating the switch 31 can be left in the battery coupling portion 27 (or 28) without removing it therefrom. Alternatively it can be withdrawn from the battery coupling portion 27 (or 28). When the battery 21 (or 22) is removed from the battery coupling portion 27 (or 28), the cultivator 1 can be used in a condition reduced in weight. Naturally, the battery 21 (or 22) removed from the battery coupling portion 27 (or 28) can be inserted into the battery coupling portion 27 (or 28) again after it is recharged using a recharger (not shown), so that the cultivator 1 can be continuously used over an elongated time period.

As previously described, the battery attachment portion 20 in which the battery coupling portions 27 and 28 are formed can be closed by the battery cover 11. As shown in FIG. 6, the battery cover 11 may have a rubber sealing member 11d for waterproofing purposes. The sealing member 11d may preferably be circumferentially attached to an open end periphery of the battery cover 11, so as to extend over the entire length thereof. Thus, when the battery cover 11 is closed, the sealing member 11d can elastically contact a bottom surface of the battery attachment portion 20, so as to prevent the entrance of water (such as rainwater), dust or other such materials. Further, the battery cover 11 may have a pair of (right and left) engagement portions 11c. The engagement portions 11c may be arranged and constructed to engage a pair of (right and left) engagement hooks 11b formed in the battery attachment portion 20 when the battery cover 11 is closed. Thus, when the battery cover 11 is closed, the engagement portions 11c may automatically engage the engagement hooks 11b, so that the battery cover 11 can be maintained (locked) in a closed condition. Further, because the engagement portions 11c can be easily disengaged from the engagement hooks 11b through simple manipulation, the battery cover 11 can be easily opened.

As shown in FIG. 1, the handle portion 4 of the cultivator 1 may be positioned behind the main body portion 2 so as to extend obliquely upward and rearward. In particular, the handle portion 4 may have a base portion 4a and a tiltable portion 4c. The base portion 4a may be secured to the support arm 23 so as to extend obliquely upward and rearward. Conversely, as shown in FIG. 4, the tiltable portion 4c may have a Y-shape (a centrally branched shape) and have a pair of grips 4d and 4e that are capable of being grasped by the user's hands. The grips 4d and 4e may be attached to distal end portions (upper end portions) of the tiltable portion 4c. A proximal end portion (a central branched portion) of the tiltable portion 4c may be connected to an upper end portion of the base portion 4a via a pivot shaft 4b such that the tiltable portion 4c can be tiltable back and froth. Further, a tilt angle of the tiltable portion 4c relative to the base portion 4a can be gradually changed and adjusted. Therefore, the grips 4d and 4e can be appropriately adjusted in height for a user's body size. Further, the tiltable portion 4c can be tilted over the main body portion 2 by fully tilting forward about the pivot shaft 4b.

The tiltable portion 4c may have an operation switch portion 6 that is positioned adjacent to the distal end portion of one (the right grip 4e in this embodiment) of the grips 4d and 4e. The operation switch portion 6 may include an upwardly facing power switch 6a, a laterally facing unlock switch 6b and a rearwardly projecting lever-type actuator switch 6c. When the user presses the power switch 6a with the finger of the hand grasping the right grip 4e, electricity can be fed to the power circuit of the main body portion 2, so as to provide a condition in which the electric motor 10 can be activated. Thereafter, when the actuator switch 6c is pulled while the unlock switch 6b is pressed, the electric motor 10 can be started, so that the cultivator blades 18 can be rotated. If the actuator switch 6c is pulled while the unlock switch 6b is not pressed, the actuator switch 6c cannot function and the electric motor 10 cannot be started.

Further, the cultivator 1 may include carrier handles 7 and 8 that are respectively attached to a front portion of the casing 19 of the functioning portion 3 and the base portion 4a of the handle portion 4. Therefore, the user can grasp the carrier handles 7 and 8 with both hands in order to carry the cultivator 1.

The cultivator 1 of the present embodiment can be modified in order to use batteries of a different voltage (other than the specified source voltage of 36 volts) as the power source instead of the batteries 21 and 22 of 36 volts. In particular, the cultivator 1 can be modified to a cultivator 1' having a battery converter 40. According to the cultivator 1', for example, batteries other than the batteries 21 and 22 (the specified batteries) can be used as the power source when the batteries 21 and 22 cannot be used for any reason, for example, running out thereof.

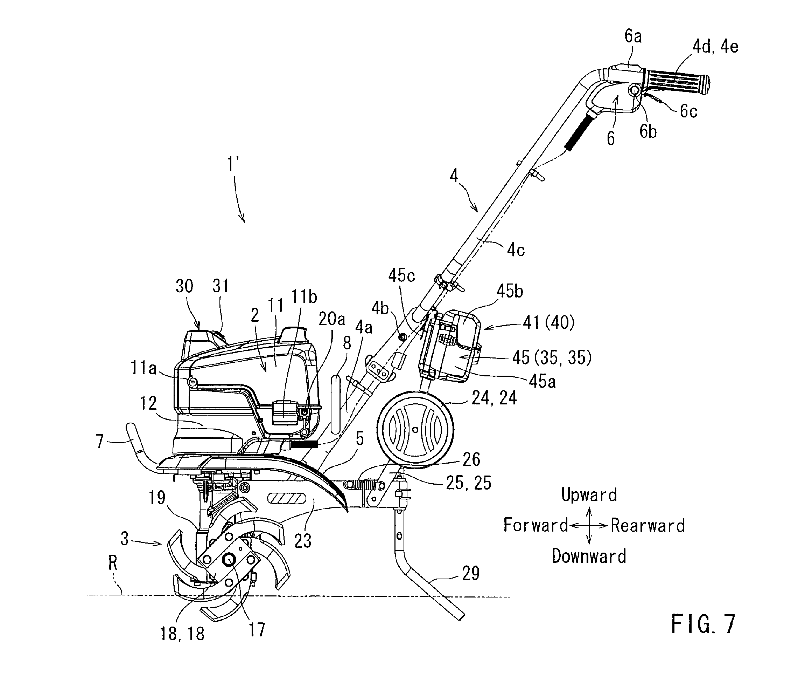

Next, the cultivator 1' will be described with reference to FIGS. 7 to 14. Further, elements that are the same in the cultivator 1 and the cultivator 1' will be identified by the same reference numerals and a detailed description of such elements may be omitted.
As shown in FIGS. 7 to 10, the cultivator 1' may be provided with the battery converter 40 instead of the batteries 21 and 22. The battery converter 40 may include a first battery converter 41 and a second battery converter 42 that are structurally different from each other.

The first battery converter 41 may be a split converter in which a connecting portion is separated from a converting portion. That is, the first battery converter 41 may include a converter unit 45 (the converting portion), an adapter unit 46 (the connecting portion) separated from the converter unit 45, and an adapter cord 47 electrically connecting the converter unit 45 and the adapter unit 46. The converter unit 45 may contain two batteries 35 of 18 volts therein. A connecting portion (not shown) of the adapter unit 46 may have the same attachment construction and size as a battery coupling portion of the battery case of each of the batteries 21 and 22 of 36 volts.

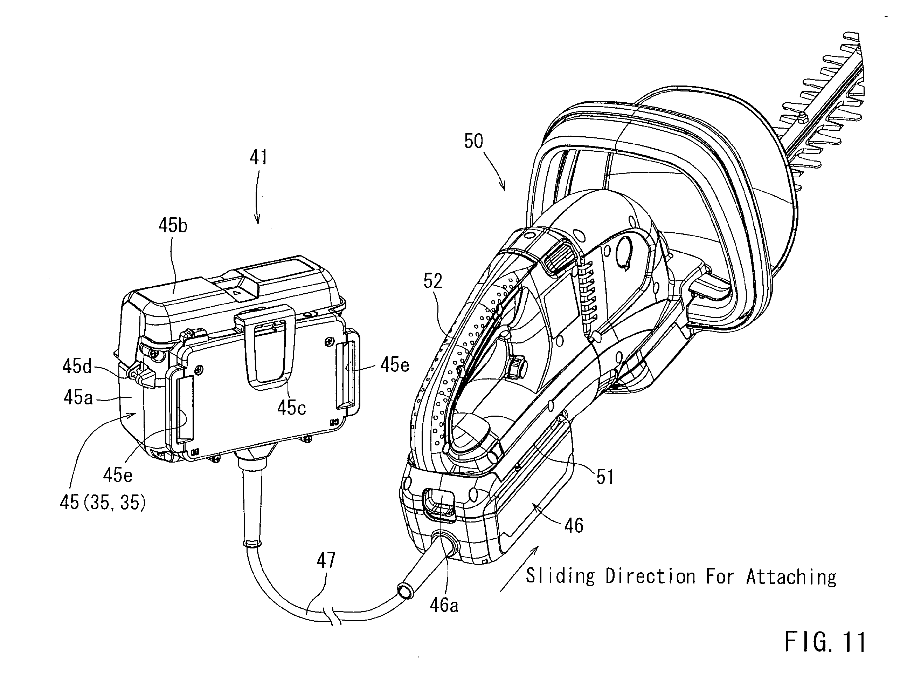

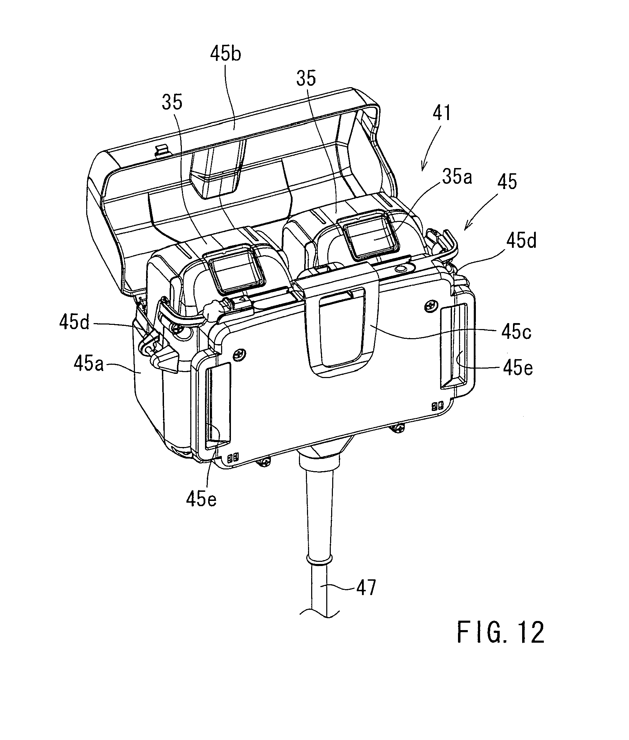

As shown in FIGS. 11 and 12, an example of the first battery converter 41 may be a battery converter that can be used as a power source of an electric-powered hedge trimmer 50 (an electric-powered gardening tool). As shown in FIG. 11, the adapter unit 46 is connected to a battery coupling portion 51 of the hedge trimmer 50, which portion is formed in a lower surface of a handle 52. Further, the battery coupling portion 51 may be configured such that the battery case of each of the batteries 21 and 22 can be connected thereto. In particular, the battery coupling portion 51 may have a slide coupling mechanism that allows the battery case of each of the batteries 21 and 22 to be slidably coupled thereto.

Further, the adapter unit 46 may have an unlocking member 46a similar to each of the unlocking members 21a and 22a formed in the batteries 21 and 22. Further, as described above, the batteries 35 are contained in the converter unit 45 and not in the adapter unit 46. Therefore, the adapter unit 46 may have a reduced weight.

As shown in FIG. 12, the converter unit 45 may have a main case 45a in which the two batteries 35 of 18 volts are received while being laterally juxtaposed to each other, and a cover portion 45b that is capable of closing and opening the main case 45a. FIG. 12 shows a condition in which the cover portion 45b is opened. Conversely, FIG. 11 shows a condition in which the cover portion 45b is opened. As will be recognized, the two batteries 35 of 18 volts contained in the main case 45a may be electrically connected in series, so as to change the voltage (18 volts) to the specified source voltage (36 volts). Thus, the two batteries 35 can function as a battery of 36 volts. Further, the batteries 35 may have locking members (not shown) formed therein. The locking members may be arranged and constructed to automatically engage the main case 45a when the batteries 35 are introduced thereinto. Also, the batteries 35 may respectively have unlocking members 35a formed therein. The unlocking members 35a may be arranged and constructed to disengage the locking members, so that the batteries 35 can be detached from the main case 45a.

Further, the converter unit 45 may have a hook 45c that is provided to a back side (a front side in FIG. 12) of the main case 45a. Also, the converter unit 45 may have strap connecting portions 45d to which a strap (not shown) is connected, and belt insertion portions 45e into which a waist belt is inserted. The strap connecting attachment portions 45d and the belt insertion portions 45e are respectively provided to both sides of the main case 45a. The converter unit 45 thus constructed may be electrically connected to the adapter unit 46 via the adapter cord 47.

In order to use the hedge trimmer 50 having the battery converter (the first battery converter 41) thus constructed, the converter unit 45 is attached to the body of a user (not shown) by, for example, hooking the hook 45c on a waist belt of the user. In this condition, the user can operate the hedge trimmer 50 by grasping the handle 52 by the hand.

Further, according to the battery converter thus constructed, the two batteries 35 of 18 volts contained in the main case 45a can be used as the power source (36 volts). In addition, the weight of the hedge trimmer 50 can be reduced because the batteries 35 are not contained in the adapter unit 46 that is coupled to the hedge trimmer 50. Therefore, the user can operate the hedge trimmer 50 easily. As a result, working efficiency can be increased.

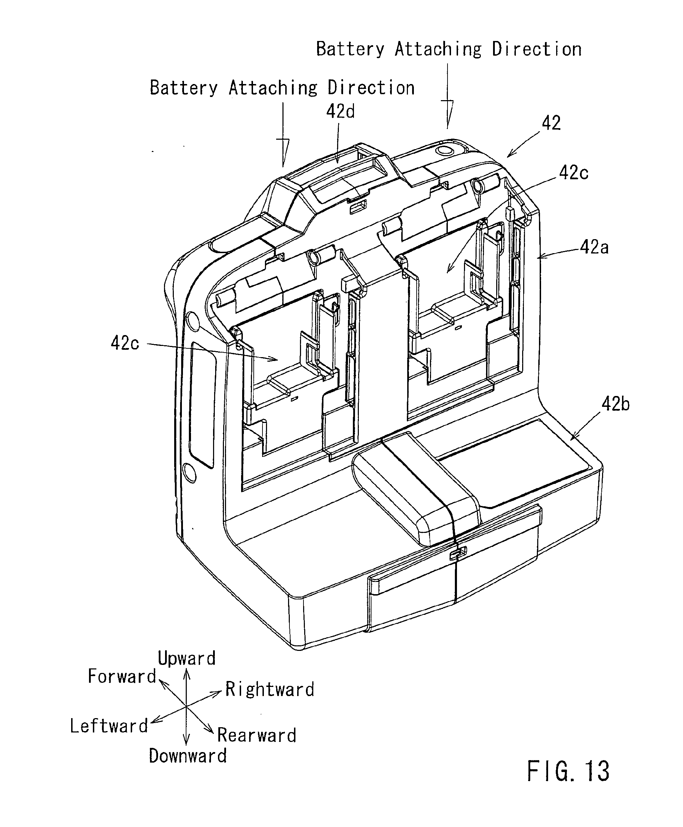

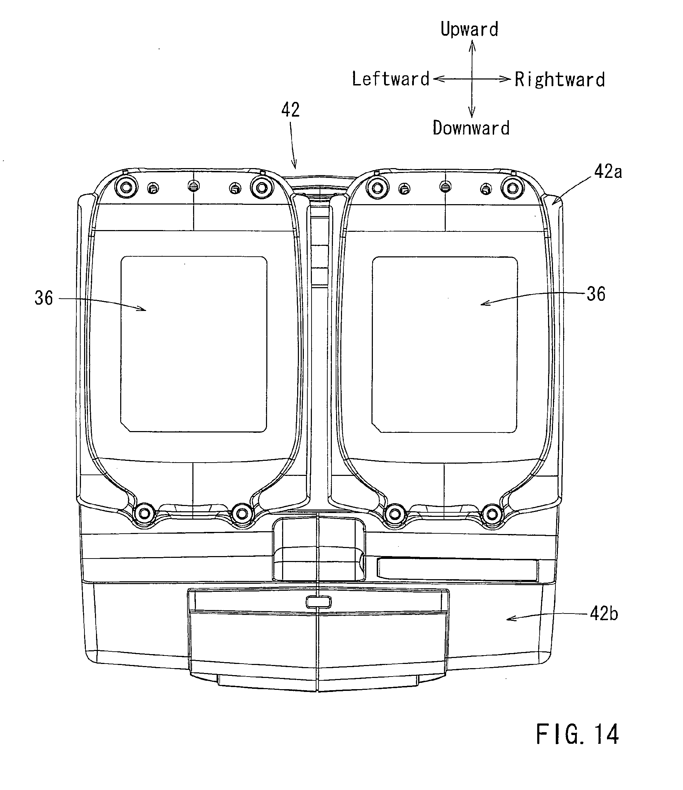

Conversely, as shown in FIGS. 13 and 14, unlike the first battery converter 41, the second battery converter 42 may be an integral converter in which the connecting portion is integrated with the converting portion. That is, the second battery converter 42 may include an L-shaped base unit having a vertical portion 42a and a lower horizontal portion 42b positioned behind the vertical portion 42a. The base unit may have a pair of battery coupling portions 42c (the converting portion) to which two batteries 36 of 18 volts can be slidably coupled. The battery coupling portions 42c may be formed in a back side (a front side in FIG. 13) of the vertical portion 42a. The battery coupling portions 42c may preferably be laterally juxtaposed to each other. Further, the base unit may be constructed such that the two batteries 36 coupled to the battery coupling portions 42c can be electrically connected in series. Thus, the voltage (18 volts) of the batteries 36 can be changed to the specified source voltage (36 volts). Therefore, the two batteries 36 coupled to the battery coupling portions 42c can function as a battery of 36 volts.

Also, the base unit may have a connecting portion 42d that is formed in a front side (a back side in FIG. 13) of the vertical portion 42a. The connecting portion 42d may have the same attachment construction as the battery coupling portion of the battery case of each of the batteries 21 and 22 of 36 volts.

Further, the battery coupling portions 42c may preferably be configured such that the batteries 36 can be slidably coupled thereto by sliding the batteries 36 from above. The batteries 36 may have locking members (not shown) formed therein. The locking members may be arranged and constructed to automatically engage the battery coupling portions 42c when the batteries 36 are introduced thereinto. Also, the batteries 36 may respectively have unlocking members (not shown) formed therein. The unlocking members may be arranged and constructed to disengage the locking members, so that the batteries 36 can be detached from the battery coupling portions 42c.

The lower horizontal portion 42b of the base unit may have a control substrate or other such devices embedded therein in order to control the batteries 36 coupled to the battery coupling portions 42c.

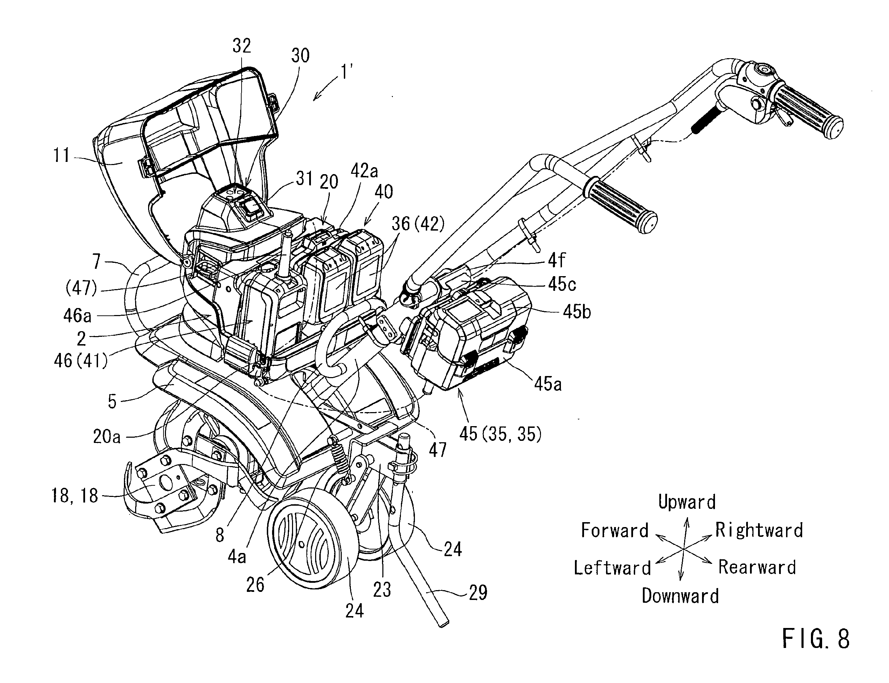

The first battery converter 41 and the second battery converter 42 thus constructed may respectively be electrically connected to the battery coupling portions 27 and 28 of the battery attachment portion 20. In particular, as shown in FIGS. 8 to 10, the connecting portion (not shown) of the adapter unit 46 of the first battery converter 41 may be slidably coupled to the left battery coupling portion 27 from above. Upon coupling of the connecting portion of the adapter unit 46 to the battery coupling portion 27, the batteries 35 contained in the converter unit 45 can be electrically connected to the power circuit of the main body portion 2, so that electrical power of 36 volts can be applied thereto via the adapter cord 47. Further, in order to detach the adapter unit 46 from the battery coupling portion 27, the unlocking member 46a may be pressed down to unlock an attached condition of the adapter unit 46 before the adapter unit 46 is pulled upward.

Conversely, the converter unit 45 of the first battery converter 41 may be attached to the handle portion 4. That is, the hook 45c of the converter unit 45 may be hooked on a hook engagement portion 4f provided to the tiltable portion 4c of the handle portion 4, so that the converter unit 45 can be attached to the handle portion 4 while it is suspended therefrom. Further, the hook engagement portion 4f may be positioned in an upper end of the base portion 4a of the handle portion 4 in a laterally central portion of the handle portion 4. That is, the hook engagement portion 4f may be positioned above the drag rod 29. As a result, the converter unit 45 that is relatively increased in weight due to the batteries 35 of 18 volts received therein can be disposed above the drag rod 29, so that weight of the batteries 35 can be efficiently applied to the drag rod 29 during cultivation. Therefore, it is possible to effectively cultivate the ground surface R without increasing the burden of the user.

The adapter cord 47 electrically connecting the converter unit 45 and the adapter unit 46 may be drawn from a cord insertion aperture 20a formed in a left side portion of the battery attachment portion 20. Therefore, the battery cover 11 can be completely closed without holding the adapter cord 47 between the battery cover 11 and the battery attachment portion 20, so as to increase waterproof and dustproof properties of the battery attachment portion 20.

Conversely, as shown in FIGS. 8 to 10, the connecting portion 42d (FIG. 13) of the base unit of the second battery converter 42 may be slidably coupled to the right battery coupling portion 28 from above. Upon coupling of the connecting portion 42d of the base unit to the battery coupling portion 28, the batteries 36 coupled to the battery coupling portions 42c of the base unit can be electrically connected to the power circuit of the main body portion 2, so that electrical power of 36 volts can be applied thereto.

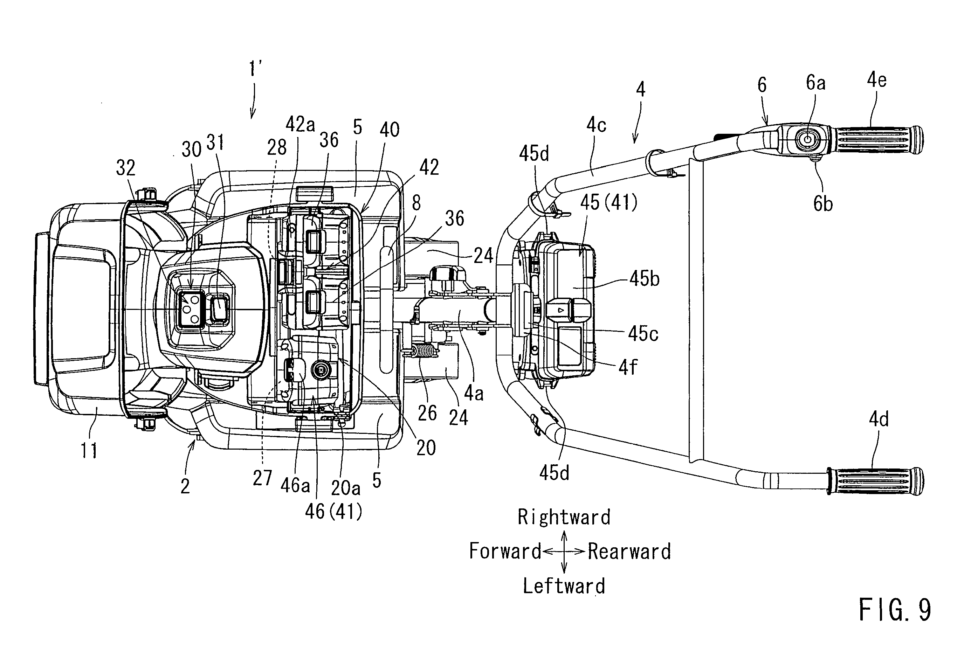

Further, the battery coupling portions 27 and 28 may not be positioned symmetrically about a center of the main body portion 2 (the motor rotational axis). In particular, as shown in FIG. 9, the left battery coupling portion 27 may be positioned relatively spaced from the center of the main body portion 2 leftwardly whereas the right battery coupling portion 28 may be positioned relatively closer to the center of the main body portion 2. Therefore, as shown in FIGS. 8 to 10, the adapter unit 46 of the first battery converter 41 can be attached to the left battery coupling portion 27. Conversely, the base unit of the second battery converter 42 having a width greater than the width of the adapter unit 46 of the first battery converter 41 can be attached to the right battery coupling portion 28.

As described above, because the battery coupling portions 27 and 28 may be positioned substantially asymmetrically about the center of the motor rotational axis (the main body portion 2), the adapter unit 46 of the first battery converter 41 and the base unit of the second battery converter 42 that are dimensionally different from each other can respectively be attached to the battery coupling portions 27 and 28 while they are laterally positioned in the battery attachment portion 20 without enlarging a width thereof.

Thus, the first battery converter 41 and the second battery converter 42 can be electrically connected to the battery coupling portions 27 and 28 of the battery attachment portion 20, so that the electrical power of 36 volts can be applied to the power circuit of the main body portion 2.

Further, similar to the cultivator 1, the main body portion 2 may be constructed such that either one of the first battery converter 41 (the batteries 35) and the second battery converter 42 (the batteries 36) can be used as the power source of 36 volts. That is, upon manipulation of the switch 31 of the battery switching portion 30, either one of the first battery converter 41 and the second battery converter 42 can be operative, so as to provide a condition in which the electrical power of 36 volts can be applied to the power circuit of the main body portion 2 via the batteries 35 of the first battery converter 41 or the batteries 36 of the second battery converter 42. Therefore, the batteries 35 (or 36) that are switched to an inoperative condition by manipulating the switch 31 can be removed from the battery coupling portion 27 (or 28) for charging the same. Thus, the cultivator 1' can substantially be continuously used.

The cultivator 1 can be powered by the batteries 21 and 22 (the rechargeable batteries) mainly used for the handheld electrical power tool such as the electric drill, the electric screwdriver, the electric cutting machine or other such devices. Therefore, it is not necessary to prepare a special battery for the cultivator 1.

As previously described, each of the batteries 21 and 22 may be the lithium ion battery, which is preferably prepared as the battery pack that is composed of the battery case and the cells received in the battery case. The lithium ion battery may have less natural discharge and be capable of being recharged. Therefore, it is possible to conveniently and advantageously use the cultivator 1. In addition, it is possible to share the batteries 21 and 22 between the electrical power tool and the cultivator 1. Thus, the batteries 21 and 22 can be efficiently used. As a result, it is possible to reduce costs for the power source of the cultivator 1.

Further, the cultivator 1 may have the two batteries 21 and 22 (the specified batteries) loaded thereon. The batteries 21 and 22 can be used as the power source in sequence by switching the batteries 21 and 22 (i.e., by switching the electrical connections between the batteries 21 and 22 and the power circuit of the main body portion 2). Therefore, it is possible to use the cultivator 1 over a prolonged period of time.

Further, in the cultivator 1', the batteries 35 and 36 of 18 volts (i.e., the batteries other than the specified batteries of 36 volts) can be used as the power source of 36 volts due to the battery converter 40 (the first battery converter 41 and the second battery converter 42).

Further, the cultivator 1' may have the first battery converter 41 and the second battery converter 42. The batteries 35 and 36 respectively contained in the first and second battery converters 41 and 42 can be used as the power source in sequence by simply manipulating the switch 31. As a result, the cultivator 1' can be used over a prolonged period of time.

Further, because the battery coupling portions 27 and 28 may be positioned substantially asymmetrically about the center of the motor rotational axis (the main body portion 2), the first and second battery converters 41 and 42 that are dimensionally and structurally different from each other can be simultaneously provided to the main body portion 2 without enlarging the same.

Various changes and modifications may be made to the present embodiment. For example, in the embodiment, the cultivator 1 is constructed such that the two batteries 21 and 22 can be loaded thereon. However, the cultivator 1 can be constructed such that three or more batteries can be loaded thereon. To the contrary, the cultivator 1 can be constructed such that a single battery can be loaded thereon as necessary. Similarly, the cultivator 1' is constructed such that the two battery converters 41 and 42 can be loaded thereon. However, the cultivator 1' can be constructed such that three or more battery converters can be loaded thereon. To the contrary, the cultivator 1' can be constructed such that a single battery converter can be loaded thereon as necessary.

Further, the cultivator 1 has the two batteries 21 and 22. Conversely, the cultivator 1' has the first battery converter 41 and the second battery converter 42. However, it is possible to use one of the batteries 21 and 22 in combination with one of the first and second battery converter 41 and 42. For example, it is possible to provide a cultivator in which the battery 21 and the second battery converter 42 are loaded. In this case, the battery 21 and the second battery converter 42 may respectively be connected to the battery coupling portion 27 and the battery coupling portion 28.

Further, the cultivator 1' has the first battery converter 41 and the second battery converter 42. However, it is possible to use two identical battery converters having the same construction as the first battery converter 41 or the second battery converter 42. That is, it is possible to provide a cultivator in which the first battery converter 41 and a battery converter having the same construction as the first battery converter 41 (or the second battery converter 42 and a battery converter having the same construction as the second battery converter 42) are loaded.

In the present embodiment, slide coupling-type batteries are exemplified as the batteries 21, 22, 35 and 36 for the electrical power tool. However, insertion (plug-in) coupling-type batteries can be used as the batteries 21, 22, 35 and 36.

In the present embodiment, the power circuit of the main body portion 2 may be specifically designed so as to be adaptable to the power source of 36 volts. However, the voltage of the power source is not limited to 36 volts.

In the present embodiment, the cultivator 1 is constructed such that the batteries 21 and 22 can be manually switched by manipulating the switch 31. However, the cultivator 1 can be modified such that the batteries 21 and 22 can be automatically switched when the battery level of the operational battery (the battery 21 or 22) is reduced to a predetermined level or less. Similarly, the cultivator 1' is constructed such that the first battery converter 41 (the batteries 35) and the second battery converter 42 (the batteries 36) can be manually switched by manipulating the switch 31. However, the cultivator 1' can be modified such that the first battery converter 41 (the batteries 35) and the second battery converter 42 (the batteries 36) can be automatically switched when the battery level of the operational battery (the batteries 35 or 36) is reduced to a predetermined level or less.

A representative example of the present invention has been described in detail with reference to the attached drawings. This detailed description is merely intended to teach a person of skill in the art further details for practicing preferred aspects of the present invention and is not intended to limit the scope of the invention. Only the claims define the scope of the claimed invention. Therefore, combinations of features and steps disclosed in the foregoing detailed description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present invention.

## Claims

1. A cultivator configured such that at least one rechargeable specified battery (21, 22) for an electrical power tool can be attached thereto as a power source, comprising:
at least one battery converter (41, 42) that is capable of being coupled to at least one battery coupling portion (27, 28).

2. The cultivator as defined in claim 1, wherein the at least one battery converter (41, 42) and the at least one battery coupling portion (27, 28) respectively comprise a plurality of battery converters (41, 42) and a plurality of battery coupling portions (27, 28), wherein the battery converters (41, 42) are capable of being respectively coupled to the battery coupling portions (27, 28).

3. The cultivator as defined in claim 1 or 2, wherein the plurality of battery converters (41, 42) comprise two battery converters (41, 42) that are structurally different from each other, and wherein the two battery converters (41, 42) are capable of being simultaneously coupled to the battery coupling portions (27, 28).

4. The cultivator as defined in any one of claims 1 to 3, wherein the battery coupling portions (27, 28) to which the two battery converters (41, 42) are coupled are positioned substantially asymmetrically about a center of a motor rotational axis.

5. The cultivator as defined in any one of claims 1 to 4, wherein the battery converters (41, 42) coupled to the battery coupling portions (27, 28) are capable of being used as a power source in sequence.

6. The cultivator as defined in any one of claims 1 to 5, wherein the at least one battery converter (41) comprises a converter unit (45) that contains batteries (35) other than the specified battery (21, 22) therein, an adapter unit (46) that is capable of being coupled to the at least one battery coupling portion (27), and an adapter cord (47) that electrically connects the converter unit (45) and the adapter unit (46), and wherein the converter unit (45) is configured to be attached to a handle portion (4) of the cultivator.

7. The cultivator as defined in claim 6, wherein the at least one battery coupling portion (27) is formed in a battery attachment portion (20), wherein the battery attachment portion (20) is capable of being opened and closed by a cover member (11), and wherein the battery attachment portion (20) has a cord insertion aperture (20a) into which the adapter cord (47) can be inserted in a condition in which the cover member (11) is closed.

8. The cultivator as defined in claim 6 or 7, wherein each of the batteries (35) other than the specified battery (21, 22) has a voltage other than a specified source voltage, and wherein the at least one battery converter (41) is configured to change the voltage of the batteries (35) other than the specified battery (21, 22) to the specified source voltage.

9. The cultivator as defined in any one of claims 1 to 8, wherein the at least one battery converter (42) comprises a base unit that contains batteries (36) other than the specified battery (21, 22) therein, and a connecting portion (42d) that is capable of being coupled to the at least one battery coupling portion (28).

10. The cultivator as defined in any one of claims 1 to 9, wherein the at least one battery converter (41, 42) and the at least one battery coupling portion (27, 28) respectively comprise first and second battery converters (41, 42) and first and second battery coupling portions (27, 28), wherein the first battery converter (41) comprises a converter unit (45) that contains batteries (35) other than the specified battery (21, 22) therein, an adapter unit (46) that is capable of being coupled to the first battery coupling portion (27), and an adapter cord (47) that electrically connects the converter unit (45) and the adapter unit (46), and wherein the second battery converter (42) comprises a base unit that contains batteries (36) other than the specified battery (21, 22) therein, and a connecting portion (42d) that is capable of being coupled to the second battery coupling portion (28).
